# EUROPEAN PATENT APPLICATION

(11) **EP 2 887 495 A1**
(43) Date of publication of application: **24.06.2015**
(21) Application number: 13830364.9
(22) Date of filing: 12.08.2013
(51) Int. Cl.: H02J 7/02

(54) **CELL BALANCING DEVICE AND CELL BALANCING METHOD**

(30) Priority: 20.08.2012 JP 2012181591
(71) Applicant: Kabushiki Kaisha Toyota Jidoshokki, Kariya-shi, Aichi 448-8671 (JP)
(72) Inventor: MAKISHI, Wataru, Kariya-shi Aichi 448-8671 (JP); HIROSE, Shinji, Kariya-shi Aichi 448-8671 (JP); YAMAMOTO, Satoshi, Kariya-shi Aichi 448-8671 (JP)
(74) Representative: TBK
(86) International application number: PCT/JP2013/071806
(87) International publication number: WO 2014/030569

(57) **Abstract**

For serially connected cells Ce1-Ce5, one end of each of inductors L12-L45 is connected to a connecting point between cells, another end of the inductor is connected to an another end of each of the cells via any of switch elements Sw12-Sw54, and a charge is transferred between adjacent cells via on/off control of the switch elements so as to equalize voltages of the cells. The serially connected cells are divided into two groups while maintaining the sequential order. The average voltage of cells within each group is calculated (1-1). The average voltages of the two groups are compared with each other (1-2). On/off control of the switch elements is performed according to the comparison result in a manner such that a charge is transferred from a cell located at a border of the group with a higher average voltage to an adjacent cell located at a border of the group with a lower average voltage (1-3).

## Description

### Technical Field

The present invention relates to a cell balance apparatus and cell balance method for equalizing voltages of a plurality of serially connected accumulator elements (hereinafter referred to as cells).

### Background Art

In a battery having a plurality of serially connected cells, cell balancing is performed to equalize voltages of the cells for effective utilization of power and long service life. In one technique, in order to perform cell balancing, each cell is connected in parallel to a resistor so that electricity can be discharged from cells in a high-voltage state through resistors, but such a technique has a problem of large current loss due to consumption of discharged current at the resistors.

A known cell balance circuit that equalizes voltages of a plurality of cells with a low loss is a circuit that uses switch elements and inductors but does not use a resistor (see for example patent literature 1).

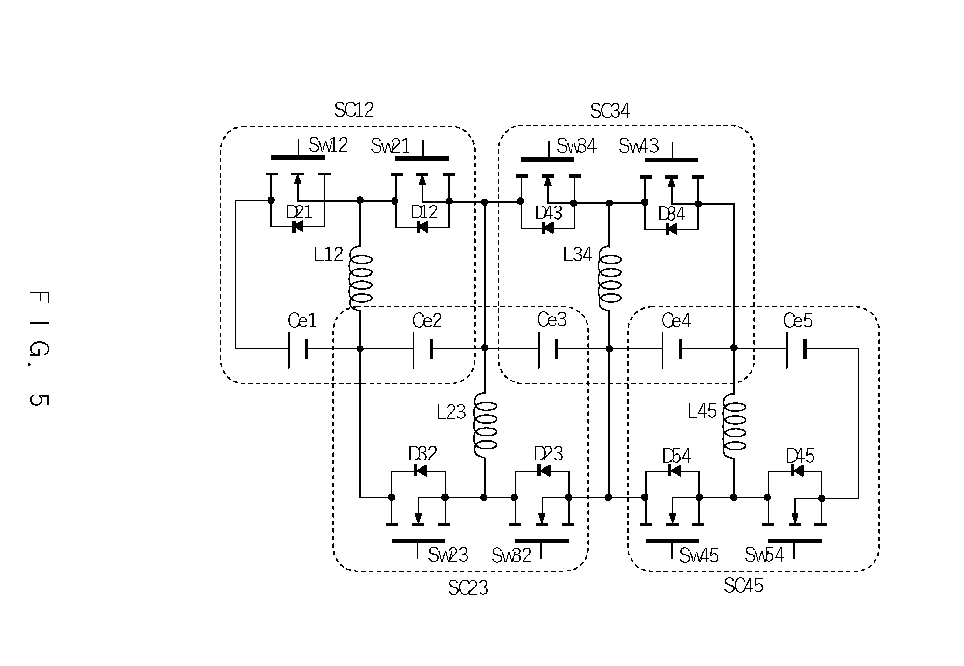

FIG. 5 illustrates an exemplary circuit that performs cell balancing using switch elements and inductors. In FIG. 5, Ce1, Ce2, Ce3, Ce4, and Ce5 indicate cells, L12, L23, L34, and L45 indicate inductors, and Sw12, Sw21, Sw23, Sw32, Sw34, Sw43, Sw45, and Sw54 indicate switch elements.

As illustrated in FIG. 5, five cells Ce1-Ce5 with the same capacity are serially connected, and switch elements Sw12-Sw54 are connected in parallel to the serially connected cells Ce1-Ce5. In particular, the switch element Sw12 is connected in parallel to the cell Ce1; the switch elements Sw21 and Sw23 are connected in parallel to the cell Ce2; the switch elements Sw32 and Sw34 are connected in parallel to the cell Ce3; the switch elements Sw43 and Sw45 are connected in parallel to the cell Ce4; the switch element Sw54 is connected in parallel to the cell Ce5.

The inductor L12 has an end connected to a connecting point between the cells Ce1 and Ce2, and another end connected to a connecting point between the switch elements Sw12 and Sw21. The inductor L23 has an end connected to a connecting point between the cells Ce2 and Ce3, and another end connected to a connecting point between the switch elements Sw23 and Sw32. The inductor L34 has an end connected to a connecting point between the cells Ce3 and Ce4, and another end connected to a connecting point between the switch elements Sw34 and Sw43. The inductor L45 has an end connected to a connecting point between the cells Ce4 and Ce5, and another end connected to a connecting point between the switch elements Sw45 and Sw54.

In such a cell balance circuit, two adjacent cells Ce1 and Ce2 are paired with each other; two adjacent cells Ce2 and Ce3 are paired with each other; two adjacent cells Ce3 and Ce4 are paired with each other; two adjacent cells Ce4 and Ce5 are paired with each other; and four switching converters SC12, SC23, SC34, and SC45 are configured to transfer charges between the cells of each pair. For each of the four switching converters SC12, SC23, SC34, and SC45, the voltages of the two cells of the pair are compared with each other; a switch element connected in parallel to the cell with the higher voltage is put in a conduction (on) state, and a switch element connected in parallel to the cell with the lower voltage is put in a cut-off (off) state, thereby equalizing the voltages of the cells of each pair.

Referring to, for example, the pair of cells Ce1 and Ce2, when the cell Ce1 has a higher voltage than the cell Ce2, the switch element Sw12 is put in an on state, and the switch element Sw21 is put in an off state. Putting the switch element Sw12 in the on state forms a closed loop of "cell Cel→switch element Sw12→inductor L12→cell Cel", thereby causing electric energy to migrate from the cell Ce1 to the inductor L12.

Subsequently, putting the switch element Sw12 in the off state and the switch element Sw21 in the on state causes the electric energy that has migrated to the inductor L12 to migrate to the cell Ce2 through a closed circuit that passes through the switch Sw21. In such an operation, charges are transferred from the cell Ce1, i.e., a high-voltage cell, to the cell Ce2, i.e., a low-voltage cell, so that the voltages of the cells Ce1 and Ce2 can be equalized.

Referring again to the pair of cells Ce1 and Ce2, when the cell Ce2 and the cell Ce1 respectively have a high voltage and a low voltage, the switch element Sw21 is put in the on state, and the switch element Sw12 is put in the off state. This forms a closed loop of "cell Ce2→inductor L12→switch element Sw21→cell Ce2", thereby causing electric energy to migrate from the cell Ce2 to the inductor L12.

Subsequently, putting the switch element Sw21 in the off state and the switch element Sw12 in the on state causes the electric energy that has migrated to the inductor L12 to migrate to the cell Ce1 through a closed circuit that passes through the switch Sw12, and charges are transferred from the cell Ce2 to the cell Ce1, so that the voltages of the cells Ce1 and Ce2 can be equalized.

As in the operation above, for the pair of adjacent cells Ce2 and Ce3, the pair of adjacent cells Ce3 and Ce4, and the pair of adjacent cells Ce4 and Ce5, the voltages of the two cells of each of the pairs are equalized to enable cell balancing such that the voltages of serially connected cells are equalized without a current being consumed by a resistor.

### Citation List

### Patent Literature

Patent literature 1: Japanese Laid-open Patent Publication No. 2010-220373

### Summary of Invention

### Technical Problem

For a battery having many (more than two) serially connected cells, switching-converter-based conventional cell balancing is performed such that the voltages of two adjacent cells are compared, and the direction of a charge transfer is determined in accordance with the comparison result, thereby driving or stopping a switching converter. Hence, due to, for example, the consecutively exerted influence of a variation in the voltage of surrounding cells, a repetitive change in the voltages of an adjacent cell from high to low or vice versa, or a useless repetitive-reciprocating-motion of charges, charge transfers as a whole are not performed efficiently, leading to cell balancing requiring a long time. In view of such a problem, the present invention provides a cell balance apparatus and cell balance method for improving the operation efficiency of cell balancing so as to shorten the time required for cell balancing.

### Solution to Problem

A cell balance apparatus in accordance with the invention is a cell balance apparatus wherein, for at least three serially connected accumulator elements (cells), one end of an inductor is connected to a connecting point between adjacent cells, another end of the inductor is connected to another end of each of the adjacent cells via a switch element, and a charge is transferred between the adjacent cells via on/off control of the switch elements so as to equalize the voltages of the cells, the cell balance apparatus including: average-voltage calculating unit to divide the plurality of serially connected cells into two groups while maintaining the sequential order of the serial connection, and to calculate the average voltage of cells within each group; average-voltage comparing unit to compare the average voltages of the two groups calculated by the average-voltage calculating means; and on/of f control unit to perform on/off control of the switch elements in accordance with the comparison result provided by the average-voltage comparing means in a manner such that a charge is transferred from a cell located at a border of the group with the higher average voltage to an adjacent cell located at a border of the group with the lower average voltage.

In such a configuration, all of the cells are divided into two groups, with an inductor of a driven switching converter serving as a border between these groups, and the direction of a charge transfer is determined by comparing the average voltages of the two groups, so that the direction of a charge transfer for cell balancing can be uniquely determined in accordance with non-uniformity of cell voltages over the entirety of a battery, thereby minimizing the amount of a charge transfer for cell balancing.

### Advantageous Effects of Invention

In the present invention, the direction of a charge transfer for cell balancing is uniquely determined without being affected by a variation in the voltage of surrounding cells. This prevents a useless repetitive-reciprocating-motion of charges between adjacent cells and thus minimizes the amount of a charge transfer. Hence, cell balancing can be performed efficiently, thereby improving the efficiency in equalizing cell voltages and shortening the time required to perform cell balancing.

### Brief Description of Drawings

FIG. 1 illustrates an exemplary configuration of a cell balance apparatus in accordance with the present invention;
FIG. 2 illustrates examples of the individual average voltages of two groups of cells;
FIG. 3 illustrates a first example of a cell balance method in accordance with the invention;
FIG. 4 illustrates a second example of a cell balance method in accordance with the invention; and
FIG. 5 illustrates an exemplary circuit that performs cell balancing.

### Description of Embodiments

Embodiments will be described in detail below with reference to the drawings. Descriptions will be given of the embodiments with reference to exemplary operations of cell balancing for five serially connected cells, but the present invention is not limited to this but is applicable to cell balancing for three or more serially connected cells.

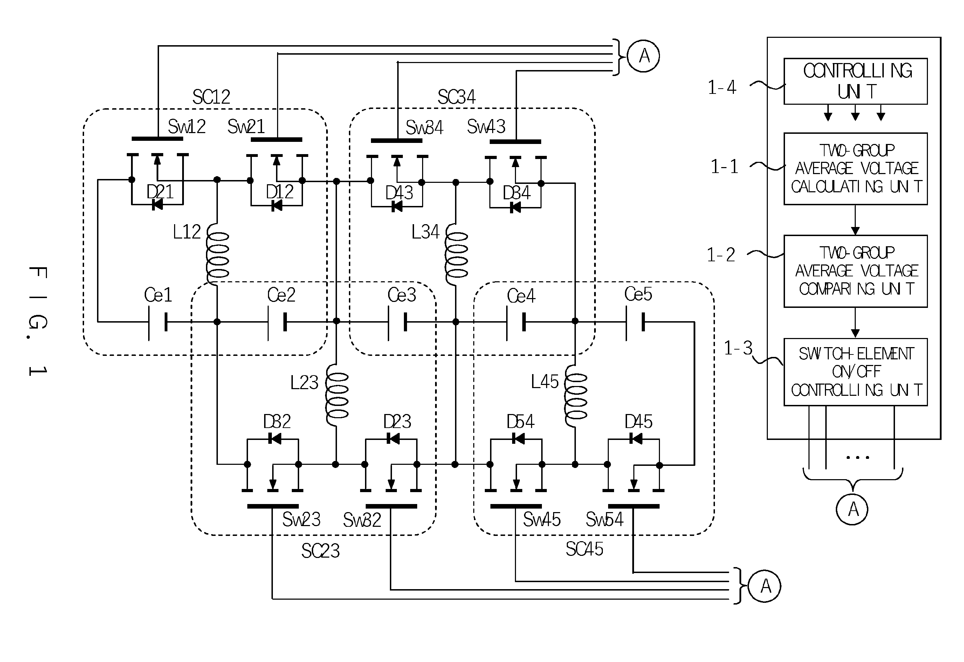

FIG. 1 illustrates an exemplary configuration of a cell balance apparatus. In FIG. 1, the configurations and operations of individual switching converters SC12, SC23, SC34, and SC45 are similar to those described above with reference to FIG. 5, and overlapping descriptions are omitted herein.

A cell balance apparatus in accordance with the invention includes a two-group average voltage calculating unit 1-1, a two-group average voltage comparing unit 1-2, a switch-element on/off controlling unit 1-3, and a controlling unit 1-4, such that all cells can be divided into two groups with an inductor of a driven switching converter serving as a border between these groups, such that the direction of a charge transfer can be determined by comparing the average voltages of the two groups, and such that charges can be transferred in that direction.

The two-group average voltage calculating unit 1-1 receives the cell voltages of individual cells Ce1, Ce2, Ce3, Ce4, and Ce5 from voltage measuring means (not illustrated) for these cells. The two-group average voltage calculating unit 1-1 divides at least three serially connected cells sequentially into two groups while maintaining the sequential order of the serial connection, and calculates the average voltage of cells within each group.

The two-group average voltage comparing unit 1-2 compares the average voltages of two groups calculated by the two-group average voltage calculating unit 1-1. The switch-element on/off controlling unit 1-3 performs on/off control of switch elements in accordance with the comparison result provided by the two-group average voltage comparing unit 1-2 in a manner such that a charge is transferred from a cell located at a border of the group with the higher average voltage to an adjacent cell located at a border of the group with the lower average voltage.

The two-group average voltage calculating unit 1-1 may be configured to divide at least three serially connected cells sequentially into two groups while maintaining the sequential order of the serial connection, and to calculate the average voltage of cells of one of the groups and the average voltage of all of the cells. The two-group average voltage comparing unit 1-2 may be configured to compare the average voltage of one of the groups with the average voltage of all of the cells.

In this case, the switch-element on/off controlling unit 1-3 performs on/off control of switch elements in a manner such that, when the average voltage of one of the groups is higher than the average voltage of all of the cells, a charge is transferred from a cell located at a border of the one group to an adjacent cell located at a border of the other group, and such that, when the average voltage of the one group is lower than the average voltage of all of the cells, a charge is transferred to the cell located at the border of the one group from the adjacent cell located at the border of the other group.

The controlling unit 1-4 controls operations of the aforementioned function units 1-1 to 1-3 and, for the switch-element on/off controlling unit 1-3, controls the timing of on/off control of switch elements performed for a charge transfer between adjacent cells located at the borders of groups.

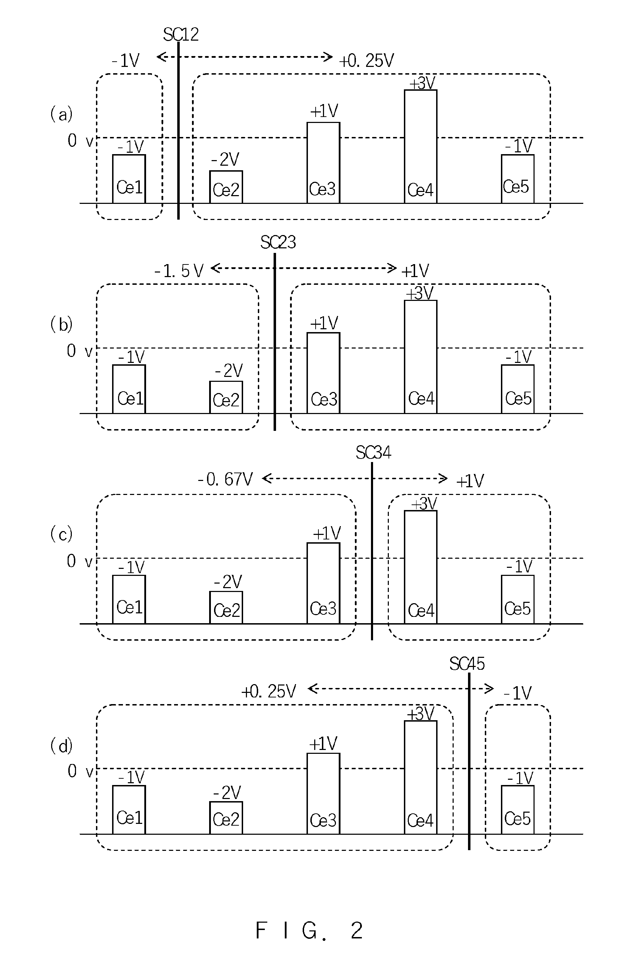

FIG. 2 illustrates exemplary average voltages of two individual groups, the groups being obtained by dividing cells Ce1-Ce5 into two groups. The grouping manner is such that five serially connected cells Ce1-Ce5 are divided successively into two groups while maintaining the sequential order of the serial connection. Then, the average voltage of cells within each group is calculated. Assume that the average voltage of all of the cells is a reference voltage of 0V and that the cell Ce1 has a voltage of -1V; the cell Ce2, -2V; the cell Ce3, +1V; the cell Ce4, +3V; and the cell Ce5, -1V.
(a) in FIG. 2 depicts an example in which a group consisting of only the cell Ce1 has an average voltage of -1V, and a group consisting of the cells Ce2-Ce5 has an average voltage of +0.25V. (In this case, a border between the groups is located between the cells Ce1 and Ce2. The cells Ce1 and Ce2 are cells located at the borders of the groups and are also adjacent cells located at the border between the two groups.)
(b) in FIG. 2 depicts an example in which a group consisting of the cells Ce1-Ce2 has an average voltage of -1. 5V, and a group consisting of the cells Ce3-Ce5 has an average voltage of +1V. (In this case, a border between the groups is located between the cells Ce2 and Ce3. The cells Ce2 and Ce3 are cells located at the borders of the groups and are also adjacent cells located at the border between the two groups.)
(c) in FIG. 2 depicts an example in which a group consisting of the cells Ce1-Ce3 has an average voltage of -0.67V, and a group consisting of the cells Ce4-Ce5 has an average voltage of +1V.
(d) in FIG. 2 depicts an example in which a group consisting of the cells Ce1-Ce4 has an average voltage of +0.25V, and a group consisting of only the cell Ce5 has an average voltage of -1V.

The switching converter SC12 lies between the cells Ce1 and Ce2. The switching converter SC23 lies between the cells Ce2 and Ce3. The switching converter SC34 lies between the cells Ce3 and Ce4. The switching converter SC45 lies between the cells Ce4 and Ce5.

Referring to the switching converter SC23, as indicated by (b) in FIG. 2, the average voltage of the cells Ce1 and Ce2, -1. 5V, is compared with the average voltage of the cells Ce3-Ce5, +1V, and the switching converter SC2 causes a current to flow from the cell Ce3 belonging to the group with the higher average voltage (a cell located at the border of the higher-average-voltage group) to the cell Ce2 belonging to the group with the lower average voltage (an adjacent cell located at the border of the lower-average-voltage group).

Outflow/inflow of a current caused by the switching converter SC23 stops when the average voltage of the cells Ce1 and Ce2 becomes equal to or greater than the average voltage of the cells Ce3-Ce5. Alternatively, outflow/inflow of a current may stop when a difference between the average voltage of all of the cells and either of the average voltage of the cells Ce1 and Ce2 or the average voltage of the cells Ce3-Ce5 becomes equal to or less than a predetermined threshold.

Similarly, the other switching converters, i.e., the switching converters SC12, SC34, and SC45, each determine the direction of a charge transfer according to the average voltages of the cells of the groups sandwiching the switching converter. The switching converters SC12, SC23, SC34, and SC45 may each be configured to drive switch elements simultaneously or in parallel.

In this case, operations of each of the switching converters are not affected by operations of the other switching converters. This is because, referring to, for example, the switching converter SC23, operations of the switching converter SC23 relate to only a charge transfer between the cells Ce2 and Ce3, and this charge transfer does not change the average voltages of the groups of the other grouping manners.

That is, for the group consisting of the cells Ce2-Ce5 of the grouping manner of (a) in FIG. 2, the charge transfer between the cells Ce2 and Ce3 corresponds to a charge transfer between cells within the same group, and hence a change is not made to the average voltage of the group consisting of the cells Ce2-Ce5. Similarly, for the group consisting of the cells Ce1-Ce3 of the grouping manner of (c) in FIG. 2, the charge transfer between the cells Ce2 and Ce3 corresponds to a charge transfer between cells within the same group, and hence a change is not made to the average voltage of the group consisting of the cells Ce1-Ce3. For the group consisting of the cells Ce1-Ce4 of the grouping manner of (d) in FIG. 2, the charge transfer between the cells Ce2 and Ce3 corresponds to a charge transfer between cells within the same group, and hence a change is not made to the average voltage of the group consisting of the cells Ce1-Ce4.

Charge transfers caused by the switching converters SC12, SC34, and SC45 also do not affect operations of the switching converter SC23. That is, the switching converter 12 causes only the charge transfer between the cells Ce1 and Ce2, the switching converter SC34 causes only the charge transfer between the cells Ce3 and Ce4, and the switching converter SC45 causes only the charge transfer between the cells Ce4 and Ce5, with the result that the average voltages of the group consisting of the cells Ce1 and Ce2 and the group consisting of the cells Ce3-Ce5 are not affected.

Hence, the switching converters SC12, SC23, SC34, and SC45 can be driven independently from each other, and the controlling unit 1-4 can drive the switching converters SC12, SC23, SC34, and SC45 simultaneously or in parallel, thereby shortening the time for the operations of cell balancing.

### Example 1

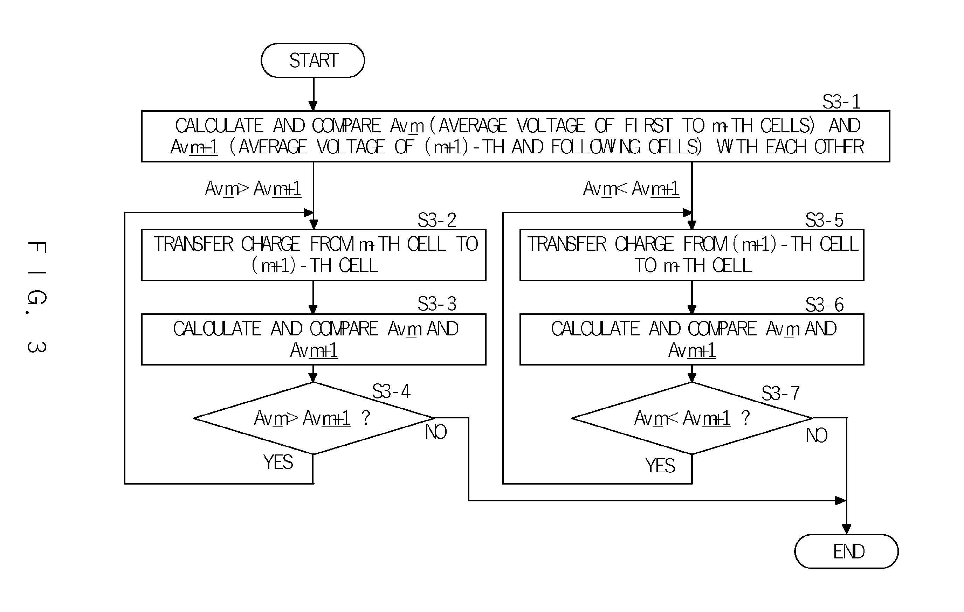

FIG. 3 illustrates a first example of the flow of a cell balance method in accordance with the invention. FIG. 3 depicts exemplary operations of a charge transfer for m-th and (m+1)-th cells of serially connected cells, the m-th and (m+1)-th cells being adjacent to each other. Assume that n cells are present. In the first example, first, an average voltage Avm of a group consisting of first to m-th cells and an average voltage Avm+1 of a group consisting of (m+1)-th to n-th cells are calculated, and Avm and Avm+1 are compared with each other (S3-1).

After the comparing, when Avm is greater than Avm+1, ON/OFF control of a switch element is performed to transfer a charge from the m-th cell to the (m+1)-th cell (S3-2). After the charge is transferred, Avm and Avm+1 are calculated and compared with each other (S3-3). When Avm is greater than Avm+1 again (YES in S3-4), ON/OFF control of a switch element is performed again to transfer a charge from the m-th cell to the (m+1)-th cell (S3-2). When Avm becomes equal to or less than Avm+1 (NO in S3-4), the operations end.

After the comparing, when Avm is less than Avm+1, ON/OFF control of a switch element is performed to transfer a charge from the (m+1)-th cell to the m-th cell (S3-5). After the charge is transferred, Avm and Avm+1 are calculated and compared with each other (S3-6). When Avm is less than Avm+1 again (YES in S3-7), ON/OFF control of a switch element is performed again to transfer a charge from the (m+1)-th cell to the m-th cell (S3-6). When Avm becomes equal to or greater than Avm+1 (NO in S3-7), the operations end.

### Example 2

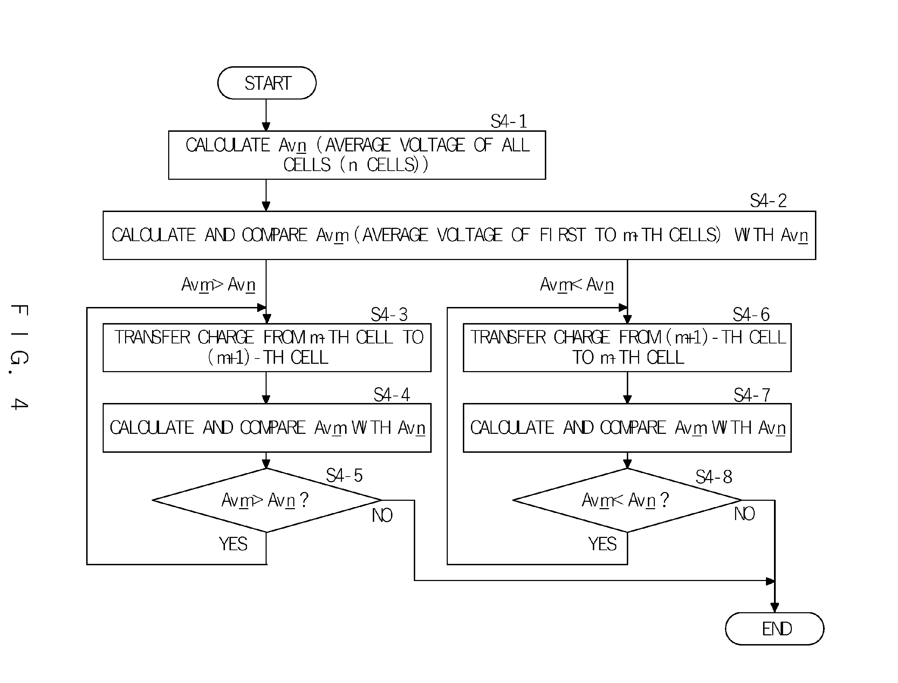

FIG. 4 illustrates a second example of the flow of a cell balance method in accordance with the invention. FIG. 4 also depicts exemplary operations of a charge transfer for m-th and (m+1)-th cells of serially connected cells, the m-th and (m+1)-th cells being adjacent to each other. Assume that n cells are present. In the second example, the average voltage of cells of only one of two groups and the average voltage of all of the cells are calculated and compared with each other to determine the direction of a charge transfer.

When the average voltage of one of the two groups is less than the average voltage of the other group, the average voltage of the one group is necessarily less than the average voltage of all of the cells, and the average voltage of the other group is necessarily greater than the average voltage of all of the cells.

Hence, unlike the case in the first example, in which the average voltages of two groups are compared, the average voltage of one group and the average voltage of all of the cells may be compared to determine the direction of a charge transfer. The second example is based on such a principle of operation.

The following will describe the operation flow of the second example with reference to FIG. 4. An average voltage Avn of n cells is calculated (S4-1). An average voltage Avm of a group consisting of first to m-th cells is calculated, and Avm and Avn are compared with each other (S4-2).

After the comparing, when Avm is greater than Avn, ON/OFF control of a switch element is performed to transfer a charge from the m-th cell to the (m+1)-th cell (S4-3). After the charge is transferred, Avm is calculated and compared with Avn (S4-4). When Avm is greater than Avn again (YES in S4-5), ON/OFF control of a switch element is performed again to transfer a charge from the m-th cell to the (m+1)-th cell (S4-3). When Avm becomes equal to or less than Avn (NO in S4-5), the operations end.

After the comparing, when Avm is less than Avn, ON/OFF control of a switch element is performed to transfer a charge from the (m+1)-th cell to the m-th cell (S4-6). After the charge is transferred, Avm is calculated and compared with Avn (S4-7). When Avm is less than Avn again (YES in S4-8), ON/OFF control of a switch element is performed again to transfer a charge from the (m+1)-th cell to the m-th cell (S4-6). When Avm becomes equal to or greater than Avn (NO in S4-8), the operations end.

The cell balancing according to each of the aforementioned two ways of grouping based on a charge transfer between adjacent cells at the borders of groups may be simultaneously performed or may be performed in chronological order between adjacent cells located at the group border of each of the ways of grouping. It should be noted that the invention is not limited to the embodiments above, and various configurations or embodiments can be applied without departing from the spirit of the invention.

## Claims

1. A cell balance apparatus wherein, for at least three serially connected accumulator elements (hereinafter referred to as "cells"), one end of an inductor is connected to a connecting point between adjacent cells, another end of the inductor is connected to another end of each of the adjacent cells via a switch element, and a charge is transferred between the adjacent cells via on/off control of the switch elements so as to equalize voltages of the cells, the cell balance apparatus comprising:
average-voltage calculating unit to divide the plurality of serially connected cells into two groups while maintaining a sequential order of the serial connection and to calculate an average voltage of cells within each group;
average-voltage comparing unit to compare the average voltages of the two groups calculated by the average-voltage calculating unit; and
on/off control unit to perform on/off control of the switch elements in accordance with a comparison result provided by the average-voltage comparing unit in a manner such that a charge is transferred from a cell located at a border of the group with a higher average voltage to an adjacent cell located at a border of the group with a lower average voltage.

2. A cell balance apparatus wherein, for at least three serially connected accumulator elements (hereinafter referred to as "cells"), one end of an inductor is connected to a connecting point between adjacent cells, another end of the inductor is connected to another end of each of the adjacent cells via a switch element, and a charge is transferred between the adjacent cells via on/off control of the switch elements so as to equalize voltages of the cells, the cell balance apparatus comprising:
average-voltage calculating unit to divide the plurality of serially connected cells into two groups while maintaining a sequential order of the serial connection and to calculate an average voltage of cells of one of the groups and an average voltage of all cells;
average-voltage comparing unit to compare the average voltage of the one of the groups and the average voltage of all cells, both calculated by the average-voltage calculating unit; and
on/off controlling unit to perform on/off control of the switch elements in accordance with a comparison result provided by the average-voltage comparing unit in a manner such that, when the average voltage of one of the groups is higher than the average voltage of all cells, a charge is transferred from a cell located at a border of the one group to an adjacent cell located at a border of another group, and such that, when the average voltage of the one group is lower than the average voltage of all cells, a charge is transferred to the cell located at the border of the one group from the adjacent cell located at the border of the another group.

3. The cell balance apparatus according to claim 1 or 2, further comprising:
controlling unit to cause the on/off controlling means to perform on/off control of the switch elements simultaneously or in parallel for every two groups obtained by dividing the plurality of serially connected cells successively into two groups while maintaining the sequential order of the serial connection, in such a manner that the charge is transferred between adjacent cells located at a border between the two groups.

4. A cell balance method including, for at least three serially connected accumulator elements (hereinafter referred to as "cells"), performing, by a circuit, on/off control of the switch elements to transfer a charge between adjacent cells so as to equalize voltages of the cells, the circuit connecting one end of an inductor to a connecting point between the adjacent cells, and connecting another end of the inductor to another end of each of the adjacent cells via a switch element, the cell balance method comprising:
dividing the plurality of serially connected cells into two groups while maintaining a sequential order of the serial connection, and calculating an average voltage of cells within each group;
comparing the average voltages of cells of the two groups; and
performing on/off control of the switch elements in accordance with a result of the comparing in a manner such that a charge is transferred from a cell located at a border of the group with a higher average voltage to an adjacent cell located at a border of the group with a lower average voltage.

5. A cell balance method including, for at least three serially connected accumulator elements (hereinafter referred to as "cells"), performing, with a circuit, on/off control of the switch elements to transfer a charge between adjacent cells so as to equalize voltages of the cells, the circuit connecting one end of an inductor to a connecting point between the adjacent cells, and connecting another end of the inductor to another end of each of the adjacent cells via a switch element, the cell balance method comprising:
dividing the plurality of serially connected cells into two groups while maintaining a sequential order of the serial connection, and calculating an average voltage of cells of one of the groups and an average voltage of all cells;
comparing the average voltage of cells of the one of the groups and the average voltage of all cells; and
performing on/off control of the switch elements in accordance with a result of the comparing in a manner such that, when the average voltage of one of the groups is higher than the average voltage of all cells, a charge is transferred from a cell located at a border of the one group to an adjacent cell located at a border of another group, and such that, when the average voltage of the one group is lower than the average voltage of all cells, a charge is transferred to the cell located at the border of the one group from the adjacent cell located at the border of the another group.

6. The cell balance method according to claim 4 or 5, further comprising:
performing on/off control of the switch elements simultaneously or in parallel for every two groups obtained by dividing the plurality of serially connected cells successively into two groups while maintaining the sequential order of the serial connection, in such a manner that the charge is transferred between adjacent cells located at a border between the two groups.
